(19)

**Europäisches Patentamt**

**European Patent Office**

**Office européen des brevets**

(11) **EP 4 080 303 B1**

(12) **EUROPEAN PATENT SPECIFICATION**

(45) Date of publication and mention
of the grant of the patent:
**19.03.2025 Bulletin 2025/12**

(21) Application number: **21218027.7**

(22) Date of filing: **28.12.2021**

(51) International Patent Classification (IPC):
**G06Q 10/063** (2023.01)    **G05B 23/02** (2006.01)

(52) Cooperative Patent Classification (CPC):
**G05B 23/0286; G05B 23/0275; G06Q 10/063;**
G05B 2219/32408

(54) **DECISION SUPPORT IN INDUSTRIAL PLANTS**

ENTSCHEIDUNGSUNTERSTÜTZUNG IN INDUSTRIELLEN ANLAGEN

SUPPORT DE DÉCISION DANS DES USINES INDUSTRIELLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2021 EP 21169991**

(43) Date of publication of application:
**26.10.2022 Bulletin 2022/43**

(73) Proprietor: **ABB SCHWEIZ AG
5400 Baden (CH)**

(72) Inventors:
• **SHARMA, Divyasheel
560048 Bangalore (IN)**
• **KLOEPPER, Benjamin
68199 Mannheim (DE)**
• **GAERTLER, Marco
69221 Dossenheim (DE)**
• **ZIOBRO, Dawid
72462 Västerås (SE)**
• **HALLSTADIUS LINGE, Simon
72476 Västerås (SE)**
• **RODRIGUEZ, Pablo
69488 Birkenau (DE)**
• **BERNING, Matthias
67549 Worms (DE)**

• **BORRISON, Reuben
68782 Brühl (DE)**
• **DIX, Marcel
78476 Allensbach (DE)**
• **SCHMIDT, Benedikt
69117 Heidelberg (DE)**
• **ABUKWAIK, Hadil
69469 Weinheim (DE)**
• **KOTRIWALA, Arzam Muzaffar
68526 Ladenburg (DE)**
• **MACZEY, Sylvia
69493 Hirschberg (DE)**
• **DOPPELHAMER, Jens
68526 Ladenburg (DE)**
• **K R, Chandrika
560078 Bangalore (IN)**
• **GOPALAKRISHNAN, Gayathri
LE169DL Market Harborough (GB)**

(74) Representative: **Maiwald GmbH
Elisenhof
Elisenstraße 3
80335 München (DE)**

(56) References cited:
**US-A1- 2005 015 217    US-A1- 2005 049 988
US-A1- 2013 159 240**

**Description**

FIELD OF THE INVENTION

The invention relates to decision support in industrial plants.

BACKGROUND

Industrial plants are large and complex installations. Process control systems give operators the means to monitor and control the process, e.g. by providing visualizations of the process and alarm management information, while process historians store the state of the system over time. Process visualizations typically depict parts of the process, often in a hierarchical way, showing e.g. dynamic process variables, trends and alarm states for a section of the process or for specific operator tasks. These process visualizations are based on engineering data and process models, and reflect e.g. the flow of information, material or energy in the process. Typically, though, the process topology information reflected in the process visualization is incomplete and fragmented, compared to the information contained in the engineering artifacts.

Monitoring the process allows the operator to diagnose abnormal situations and take corrective action. To mitigate production losses, the operator must rapidly assess the probable impact of the corrective action. However, the operator's ability to do so depends on their experience. Gaining experience in operating a specific plant often takes several years. For an inexperienced operator, it can be challenging to locate the required information in timely manner. Obviously, experienced operators are not available in greenfield plants. Even in brownfield plants, experienced operators leave and need to be replaced. Operator training simulators (OTS) can be used to provide a head start in operations, but these are expensive owing to the requirement for a high-fidelity process model. Instead, operations with limited efficiency in the early stages of operator training are often accepted.

For these reasons, owners of industrial plants face the risk of inefficient plant operations or even major incidents due to inexperienced operators.

US2005/015217 describes an analyzer arrangement for provision of information about a facility by means of root cause analysis.

US2005/049988 describes a method providing data for root cause analysis.

US2013/159240 describes a system receiving system fault codes, component fault codes, and failure modes.

SUMMARY

There is therefore a need for affordable solutions that can support the inexperienced operator in making decisions relating to the operation of an industrial plant. This need is met by the subject-matter of the independent claims. Optional features are set forth by the dependent claims.

According to a first aspect, there is provided a decision support system according to claim 1.

In one example the causal graph is a directed acyclic graph but it will appreciated that any probabilistic graphical model may be used to represent the conditional dependence between variables. The directed acyclic graph comprises a set of vertices or nodes representing variables in the industrial plant and a set of directed edges or arrows, each edge interconnecting two vertices. Each vertex represents an independent variable or a dependent variable. By "causal assumption" is meant that a causal relationship between two variables is assumed to exist but the causal relationship is not (yet) verified by the observational data. Reference is therefore made herein to possible (i.e. assumed or putative) causal relationships, as opposed to inferred causal relationships verified by the observational data. The causal assumptions are based on domain knowledge such as engineering data relating to the industrial plant. The causal graph may be built manually by e.g. a subject matter expert (SME) or automatically by e.g. a modeling tool, such as that described herein. One or more causal graphs may be used to capture all of the dependencies between variables in the industrial plant.

The observational data relates to prior operation of the industrial plant and may comprise collected or historical measurement data (e.g. from operation and/or commissioning) such as timeseries data relating to one or more (preferably all) of the variables represented by the causal graph. The observational data may thus be viewed as non-experimental data or empirical data. While experimental data obtained using interventions or high-fidelity simulations could also be used, it will be appreciated that this is not always possible or often prohibitively expensive.

According to the invention, performing the causal inference comprises: identifying the causal effect based on an input query; estimating the causal effect; validating the causal effect; and presenting the causal effect.

Identifying the causal effect may comprise finding all possible paths between two of the variables in the causal graph. For example, the input query (or estimand) may specify a causal relationship between the two variables for example in the form "Does variable B influence variable A?" or equivalent. In other words the query specifies one variable as an action, one variable as an outcome, and optionally one or more other variables e.g. as confounders. All possible ways in which B can have a causal effect on A are then identified. Invalid paths such as backdoor paths may be eliminated from consideration.

Estimating the causal effect comprises using conditional probabilistic formulae to estimate the strength of the causal relationship between the two variables. For example the formulae may comprise, for the two variables A and B in the input query,

$$P1 = P(A|B, \text{confounders}) \text{ and } P2 = P(A \mid \text{confounders}),$$

where a confounder is a variable (measured or controlled) in the causal graph that influences both A and B. The strength is indicated by the difference between P1 and P2. The greater the difference between P1 and P2, the stronger the causal relationship. The decision support system may be configured to use methods to estimate the statistical significance of the difference between P1 and P2, including for instance one or more of propensity-based stratification, propensity score matching, inverse propensity weighting, regression, regression discontinuity. Further estimation methods will be apparent to the person skilled in the art. Additionally or alternatively, estimating the causal effect may comprise determining that no causal relationship exists between the two variables. For example, in response to determining that P1 equals P2 (e.g. if the difference does not exceed a predetermined threshold), no causal relationship can be inferred between A and B (in other words, every statistical relationship is explained by the confounders).

Validating the causal effect comprises performing data subset validation by reestimating the strength of the causal relationship using only a subset of the observational data (and validating the causal effect in response to there being no significant change in the causal effect) and/or performing placebo treatment by reestimating the strength of the causal relationship using observational data in which data including B is replaced with data in which B is not present (and validating the causal effect when the estimated strength drops to zero or thereabouts). Further validation methods will be apparent to the person skilled in the art.

Presenting the causal effect may comprise outputting the causal effect to the human plant operator for example by way of the HMI of the process control system or dashboard. Additionally or alternatively, presenting the causal effect may comprise outputting the causal effect to an entity performing automated or semi-automated operation of the industrial plant, such as an automated plant operation system, e.g. a reinforcement learning based plant operating agent.

The decision support system may be configured to perform root-cause analysis in relation to a given (measured) variable in the industrial plant to identify which of the other variables in the causal graph are most likely to influence the given variable. Root-cause analysis may be performed for the purpose of diagnosis when the given variable is found to be anomalous or to exhibit undesired behavior. The root-cause analysis may be repeated for some or all of the measured variables in the industrial plant, e.g. when anomalies are found in several measured variables.

In one example, performing the root-cause analysis for the given variable comprises: performing the causal inference to estimate the strength of the causal relationship between the given variable and each of the other variables. For example, where the industrial plant operates using process variables $PV_1$-$PV_n$, and where the given variable is $PV_i$, performing the root-cause analysis may comprise performing the causal inference as described above using a plurality of input queries each specifying the given variable as outcome variable and one of the other variables as action variable. More particularly, for each of the other variables $B = PV_1 \ldots PV_n$ not including the given variable $A = PV_i$, the input query may take the form "Does variable B influence variable A?" or equivalent. The other variables may be ranked according to the strength of the respective causal relationships with the given variable. Identifying which of the other variables in the causal graph for the given variable are most likely to influence the given variable may comprise identifying the said other variable associated with the strongest causal relationship as the most likely root cause, or alternatively returning a list of the other variables ranked by the strength of their respective causal relationships with the given variable. Variables having no or only weak causal relationships with the given variable may be excluded.

Stated another way, performing the root-cause analysis may comprise defining a problem in terms of a value of the given variable satisfying a certain condition, and performing statistical estimation to calculate, for each of the other variables, a probability of the problem occurring given the observational data for that other variable. For example, performing the root-cause analysis may comprise evaluating $P(A=a \mid do(B=b))$ for each of the other variables $B = PV_1 \ldots PV_n$ not including the given variable $A = PV_i$, where "a" represents the problematic condition in the given variable A. The operator "do" is known in the art for simulating an intervention by reducing the observational data to include only that portion containing the stated value. The other variables may then be identified as likely root causes of the problem and/or ranked on the basis of the respective calculated probabilities. The condition may be for example that the value lies under or over a predetermined threshold or outside a predetermined range, for example where a temperature exceeds a threshold so as to be classified as a hotspot.

The decision support system may be configured to find corrective actions capable of effecting changes in a given measured process variable, for example by using the causal graph and the observational data to identify controlled variables in the industrial plant that exhibit a causal relationship with the given variable that should be corrected.

In one example, finding corrective actions comprises: performing the causal inference to estimate the strength of the causal relationship between the given variable and each of the other variables in the causal graph that is a controlled variable. For example, where the industrial plant operates using process variables $PV_1$-$PV_n$ including at least one controlled variable C, finding corrective actions may comprise performing the causal inference as described above using for each controlled variable an input query specifying the given variable as outcome variable and the controlled variable as action variable, for example in the form "Does variable C influence variable A?" or equivalent, where C is the controlled variable C, where C != A, and where A = $PV_i$. The controlled variables may be ranked according to the strength of the respective causal relationships with the given variable. The controlled variable associated with the strongest causal relationship may be identified for the corrective action, or alternatively a list of controlled variables may be identified optionally ranked by the strength of their respective causal relationships with the given variable. Variables having no or only weak causal relationships with the given variable may be excluded. Preferably the decision support system identifies as few corrective actions as possible that have the desired effect. The decision support system may be configured to use heuristics e.g. rule-based algorithms to select, exclude or prefer corrective actions, for example preferring setpoint changes over direct manipulation of actuators. What-if analysis may also be performed to eliminate corrective actions, as described below.

The decision support system may be configured to perform what-if analysis to identify one or more possible side effects of changing a controlled variable in the industrial plant. More particularly, performing the what-if analysis comprises: identifying in the causal graph a first variable A which is influenced by both second and third variables B and C which do not influence each other, and performing the causal inference to estimate the degree to which the causal effect of the second variable B on the first variable A is modified by the third variable C. For example, performing the what-if analysis may comprise evaluating $P(A \mid do(B=b), C=c)$ for all values b of B while c remains constant. Here, the what-if query is: What if the controlled variable B is set to b while the value of another variable C is c? A is the first (dependent) variable, B is the second variable, and C is the third variable. The second variable B may be a controlled variable. In this way, side effects of varying the controlled variable can be determined, i.e. a determination is made as to the effect which the second variable B has on the first variable A while the value of the third variable C was c. The process may be repeated for each causal graph in which the controlled variable is represented to list all possible side effects of modifying the controlled variable. For example, for each graph in which the controlled variable is present, the input query may relate to whether the controlled variable has a causal effect on the dependent variable(s) of the causal graph. The results across all causal graphs constitute the list of possible side effects.

The decision support system may be configured to perform combinations of root-cause analysis, finding corrective actions and what-if analysis, optionally in a sequential manner. In one example, the decision support system is configured sequentially to perform: 1) root-cause analysis to determine one or more candidate root causes for a process abnormality; 2) finding corrective actions to identify controlled variables that could address the process abnormality; 3) what-if analysis to explain what might happen when the controlled variables are changed, i.e. to analyse the possible side effects of the corrective actions. Corrective actions with few side effects may be preferred. The resulting corrective actions may be output to the operator and/or to the automated plant operation system.

According to a second aspect, there is provided a decision support method according to claim 7.

The decision support system and method of the first and second aspects therefore improve plant efficiency despite operator inexperience, reduce dependency on operator cognitive state, and provide for more effective handling of complicated situations and faster resolution of operational issues. The operator is assisted in drawing conclusions regarding how issues are connected regardless of the physical distance between elements in the plant topology.

Finding possible root causes of problems assists the operator in evaluating possible mitigations, i.e. reasoning about the consequences of operator actions intended to remedy the problems. The decision support system helps the operator to better analyze the problems and to find the root causes more quickly. Less time is therefore required to achieve an understanding of the root causes of the problems so that they can be addressed quickly and correctly. The decision support system assists the operator in identifying the root causes of problems that might arise in the industrial plant with respect to time and topological dependencies, e.g. anomalies in valves.

Finding corrective actions increases plant reliability via effective and efficient problem-solving of abnormal situations.

What-if analysis enables the operator to take faster and more informed decisions about corrective actions with fewer undesired side effects by explaining the context and forecasted consequences of the corrective actions.

Furthermore, the decision support system facilitates autonomous plant operation using artificial intelligence or otherwise automated plant operation systems by identifying root causes of problems and selecting corrective actions efficiently.

As mentioned above, the causal graph (or any probabilistic graph) may be modeled using domain knowledge including engineering data such as plant topology data, process model data, and control narratives.

According to a third aspect, there is provided a computer-readable medium according to claim 8.

These and other aspects of the invention will be apparent from and elucidated with reference to the embodiments described hereinafter.

BRIEF DESCRIPTION OF THE DRAWINGS

A detailed description will now be given, by way of example only, with reference to the accompanying drawings, in which:-

Fig. 1 illustrates an industrial plant according to the present disclosure;
Fig. 2 is a flowchart representing a method of performing causal inference;
Fig. 3 illustrates a topology graph;
Fig. 4 illustrates a causal graph;
Fig. 5 illustrates a modeling method; and
Fig. 6 illustrates a computing device that can be used in accordance with the systems and methods disclosed herein.

DETAILED DESCRIPTION

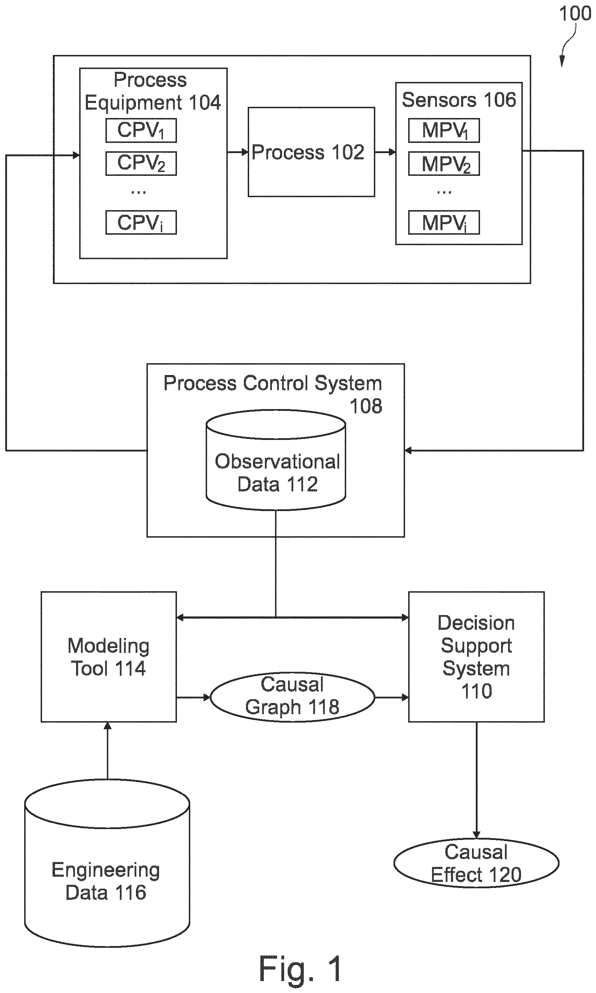

Fig. 1 schematically illustrates an industrial plant 100 carrying out an industrial process 102. The process 102 is influenced by process equipment 104 (such as actuators) which receives as input control signals specifying a plurality of controlled variables (such as actuator values or setpoints) $CPV_1$, $CPV_2$...$CPV_i$. Sensors 106 provide feedback on the process 102 in the form of a plurality of measured variables $MPV_1$, $MPV_2$...$MPV_j$. Together the controlled and measured variables may be referred to as process variables PV ($PV_1$, $PV_2$...$PV_n$). A process control system 108 receives the feedback from the sensors 106 and outputs the control signals to the process equipment 104 so as to influence the process 102 in such a way as to produce the desired product, as is known in the art.

According to the present disclosure, the industrial plant 100 further comprises a decision support system 110 configured to: obtain a causal graph 118 modeling causal assumptions relating to conditional dependence between variables in the industrial plant 100; obtain observational data 112 relating to operation of the industrial plant 100; and perform causal inference using the causal graph 118 and the observational data 112 to estimate at least one causal effect 120 relevant for making decisions when operating the industrial plant 100.

Although only one causal graph 118 is illustrated and described, several causal graphs may be used to represent the industrial process 102. The causal graphs 118 are i) provided manually by human experts, ii) automatically derived from engineering data 116 (as described further below), or any combination of the two methods. The causal graph 118 describes how the variables PV in the process 102 might influence one another. In the causal graph 118, a directed edge to a variable A from another variable B denotes that a causal relationship from B to A is expected.

Using the causal graph 118, supplemented by the observational data 112, the decision support system 110 performs causal inference to help the human operator or automated plant operation system in three use cases: (1) finding root causes; (2) finding corrective actions; and (3) what-if analysis to perform sanity checks before corrective actions are executed. Causal inference serves to ascertain whether a causal assumption is present in the observational data.

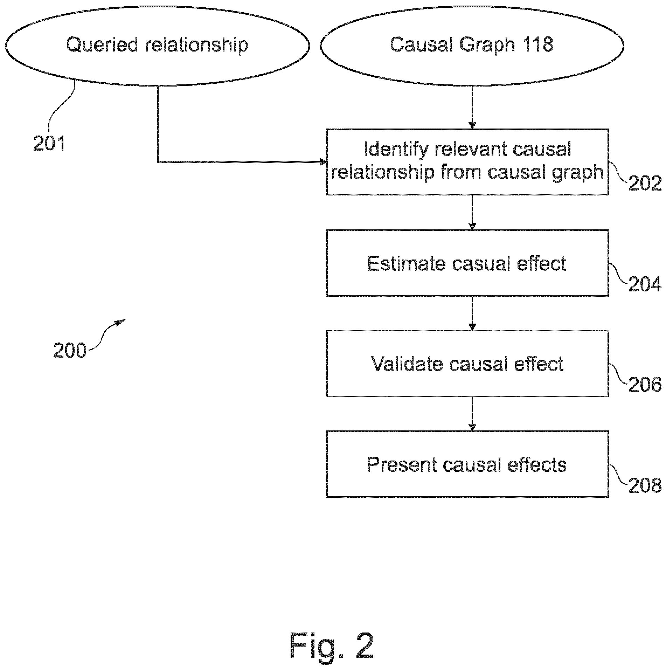

Fig. 2 is a flowchart representing a method 200 of performing causal inference. Performing the causal inference comprises: identifying 202 the causal effect 120 based on an input query 201; estimating 204 the causal effect; validating 206 the causal effect; and presenting 208 the causal effect.

In other words, in step 202 the causal graph 118 is used to decide which conditional effects (probabilistic influences) need to be taken into account when in step 204 the strength of causality is estimated. In step 206, the estimation can be tested regarding its sensitivity. At step 208, the method returns an indication as to whether variable A is actually influenced by variable B.

Starting from the causal graph 118, describing assumed causal relationships between process variables including control variables such as setpoints or actuator values, the inference requires a causal relationship to be checked. In this regard, the input query 201 is provided in the form of "Does variable B influence variable A".

After finding all possible paths from B to A in the causal graph 118 in step 202, two conditional probabilistic formula are used in step 204 to determine whether there exists a causal relationship between A and B:

$$P1 = P(A|B, \text{confounders}) \text{ and } P2 = P(A \mid \text{confounders}),$$

where confounders are all process and controlled variables that influence both A and B. If P1 equals P2 then there is no causal relationship between A and B (every statistical relationship is explained by the confounders) and if P1 does not equal P2 there is a causal relationship. The more different P1 is to P2, the stronger the relationship. Possible methods to estimate the statistical significance of the difference between P1 and P2 are for instance propensity-based stratification, propensity score matching, inverse propensity weighting, regression, regression discontinuity.

Step 206 tests the strength and validity of the causal relationship found in the previous steps. Possible approaches are using only a subset of data to test the relationship (which should yield a similar result) or (in experimentation) using a placebo treatment (replacing data where B is present with data where B is not present).

For diagnosis and root-cause analysis, the causal graph 118 and the observational data 112 are used by the decision support system 110 to identify possible causes of an anomaly in one or several process values. For each process value, one causal graph 118 may be used. Additionally or alternatively, there may be one causal graph covering the whole process 102.

To infer possible root-causes for anomalies or undesired behavior of certain process variables $PV_1...PV_n$, the causal graphs 118 for each process variable are analyzed according to the method described above in relation to Fig. 2. The input query 201 is repeated for every variable B that is not equal to A = PVi. The results of repeating the process across $PV_1...PV_n$ are integrated by searching for possible causes across $PV_1...PV_n$ to find the most likely root-cause. In addition, regression can be used to determine the direction of influence.

Moreover, topology data can be used to refine the root-cause analysis. For example, where the root-cause analysis identifies one variable (e.g. a controlled temperature) in the causal graph as a root cause, topology data may be used to identify factors contributing to that variable at an asset level going beyond the process level of the causal graph (for example the motor of a cooling unit controlling that temperature).

For identifying corrective actions, the causal graph 118 and the observational data 112 are used to identify controlled process variables that exhibit a causal relationship with a measured process variable that should be corrected.

To infer corrective actions, the process is similar to the root-cause analysis described above. The causal graphs 118 of $PV_1...PV_n$ that should be manipulated are analyzed (e.g. those process variables PV that were determined to be possible root-causes in the root-cause analysis). This time, not all variables B != $PV_i$ are checked for a causal relation, but only controlled variables C that can be altered by the operator or the plant operating system (e.g. setpoint of control loops, actuator values). Again, the results across $PV_1...PV_n$ are integrated in order to find as few corrective actions as possible that have the desired effect. Heuristics can be used to suggest or select actions, for instance preferring setpoint changes (where a controller manages the desired effect) over direct manipulation of actuators.

For what-if analysis (identifying side effects), the same causal graph 118 and the observational data 112 that were used to infer root-causes are used. In root-cause analysis, we ask the question: was it the change observed in one variable that caused an effect in another? Whereas, in the what-if analysis, we ask the question as: what if a value of one variable (i.e., a setpoint related to that variable) were changed?

When variable B influences variable A, the degree to which B influences A may be different for different values of a third variable, C. Variable B may be a controlled variable controlled using a setpoint or actuator value, or a variable influenced by such a controlled variable. In other words, changes in variable B's effect on variable A may be observed differently due to, say, different levels of valve closing. To infer what happens to variable B's effect on variable A when variable C is is set to a particular value, the same causal graphs 118 and the observational data 112 are used. The causal graph 118 of the process variable A is analyzed and $P(A \mid do(B=b), C=c)$ is evaluated where the value of "c" is fixed (the 'what-if value'), and B is a variable that impacts A but is invariant itself when C=c (i.e., B is not affected by C). For each causal graph 118 in which the variables are present, the input query 201 asks whether the controlled variable B has a causal relation with the dependent variable A of the causal graph 118 while C=c. The results across all graphs constitute the list of possible side effects.

The steps can be also combined in a sequential manner:-

(1) the root-cause candidate(s) for a process abnormality is determined;
(2) possible controlled variables that could address the root-cause or the symptom are identified (the process may favor such corrective actions that have a desired effect on many possible root causes);
(3) what-if analysis is performed to explain what might happen when the controlled variables are changed, and lastly, the possible side effects of actions are analyzed. Corrective actions with few side effects may be preferred. Additionally or alternatively, each dependent variable PV can be assigned a criticality so that corrective actions are preferred that have few side effects on critical process variables PV. The results of the various steps can be presented to the operator or used as candidate actions for an automated plant operation system such as a reinforcement learning based plant operating agent.

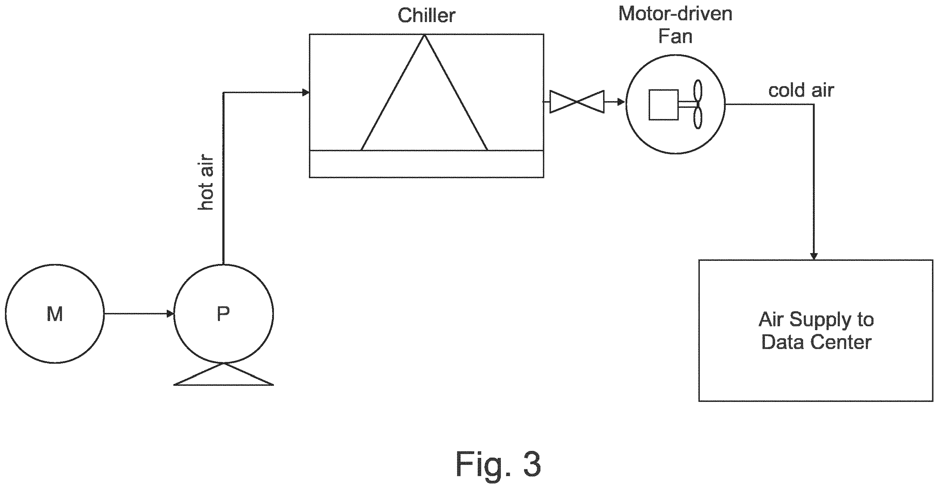

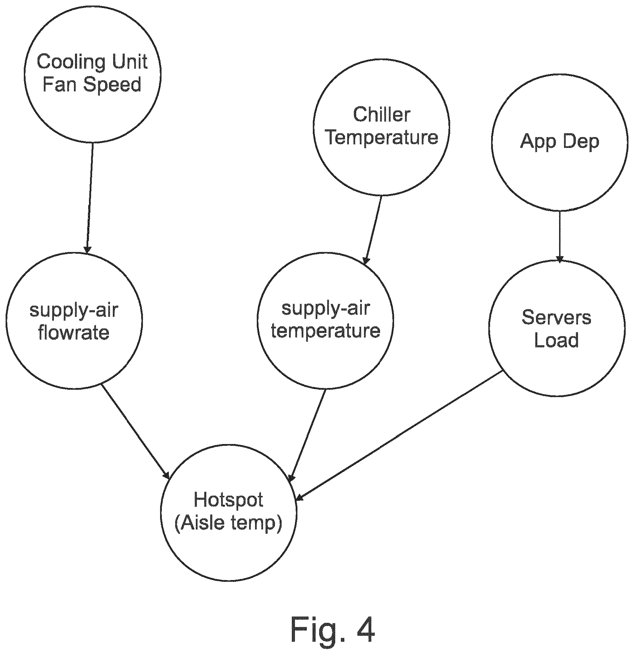

Example use cases will now be described with reference to Fig. 3, which shows a topology graph for a data center, and to Fig. 4, which illustrates a causal graph derived from the topology graph with the help of a Subject Matter Expert (SME) or learned from engineering data (e.g., by using propensity-based technique, covariate matching etc.), or using both the SME knowledge along with the engineering data. The causal graph is a directed acyclic graph comprising a set of vertices and a set of directed edges between the vertices.

The data center has a racks of servers and air conditioning units that push cold air to regulate temperature in the servers. At times, hotspots may arise in the aisles of the data center. A hotspot may be caused for various reasons. For example, a fault in the motor that powers the cooling fan that regulates the flowrate of the cold air can lead to a lack of cold air in the data center aisles and subsequently to creation of a hotspot. Or, the chiller might not be functioning properly and the supply-air temperature might not be sufficiently cold to avoid a hotspot in an aisle. Similarly, a hotspot may be created if there is overload on certain servers in an aisle due to inequitable application deployment.

In a first example use case, root-cause analysis (RCA) is performed. A hotspot is detected in the aisle temperature measured near a set of servers. An RCA input query is formulated as: does the cooling unit fan speed (variable B) influence the aisle temperature (variable A)? Since there are no confounders in this example, possible variables of interest for the root-cause analysis are:

- Supply-air flow rate, cooling unit fan speed;
- Supply-air temperature, chiller temperature;
- Servers load, application deployment.

Given the topology graph along with the causal graph, we analyze the impacted variable's causal graph (i.e., aisle temperature's causal graph) to perform further analysis in relation to each causal variable. Assuming for convenience that the servers load is constant, statistical estimation can be performed on the observational data for the following variables:

supply-air flow, Pr(hotspot|do(SFR=fr));
supply-air temperature, Pr(hotspot|do(SAT=t)).

The values "fr" and "t" may be selected based on operator experience and/or using values in the neighbourhoods of known setpoints, to investigate what might happen if the setpoints were altered. Ranked by the probabilities, a list of most-likely root causes is obtained indicating for example that the cooling unit fan motor might not be working properly, or the chiller may not be well regulated.

In a second example use case, corrective actions are found. The input query here may take the form: does a setpoint change for the supply-air flowrate (control variable) influence the aisle temperature (hotspot)? The probabilistic analysis procedure is similar to RCA except that for finding a corrective action only control variables are considered. Continuing with the example shown in Figs. 3 and 4, based on the causal graph, the causal effect may be estimated as in the RCA example, and then the supply-air temperature setpoint may be reduced, or the supply-air flowrate setpoint may be increased.

In a third example use case, what-if analysis is performed to determine the degree to which the causal effect of the supply-air flowrate on the hotspot is modified by the supply-air temperature. Changes in the supply-air flowrate (SFR) are observed due to changes in the cooling unit fan speed. The causal graph is observed for the hotspot i.e., aisle temperature. Pr(hotspot|do(SFR=f), SAT=t) is then estimated for all possible supply air temperature (SAT) values. The value "f" may again correspond to a value at or around a setpoint.

Referring again to Fig. 1, also shown is a modeling tool 114 for building the causal graph 118 using the engineering data 116 and observational data 112. The causal graph 118 is then provided to the decision support system 110.

The causal graphs 118 capture the relationships between measured and controlled variables in the process 102. There might be more than one causal graph 118 to capture the process 102, e.g. one graph for each of the process variables PV (including process KPI) modelling each PV as a dependent variable. The information provided in the causal graph 118 may be qualitative (there is a relationship) rather than quantitative (how strong the relationship is and whether it is positive or negative). According to the present disclosure, graph based models are first used to select a set of relevant measurements (e.g. going from hundreds of candidates down to a few) before the above-mentioned methods are performed to refine the network structure and estimate the strength of the relationships in terms of conditional probabilities.

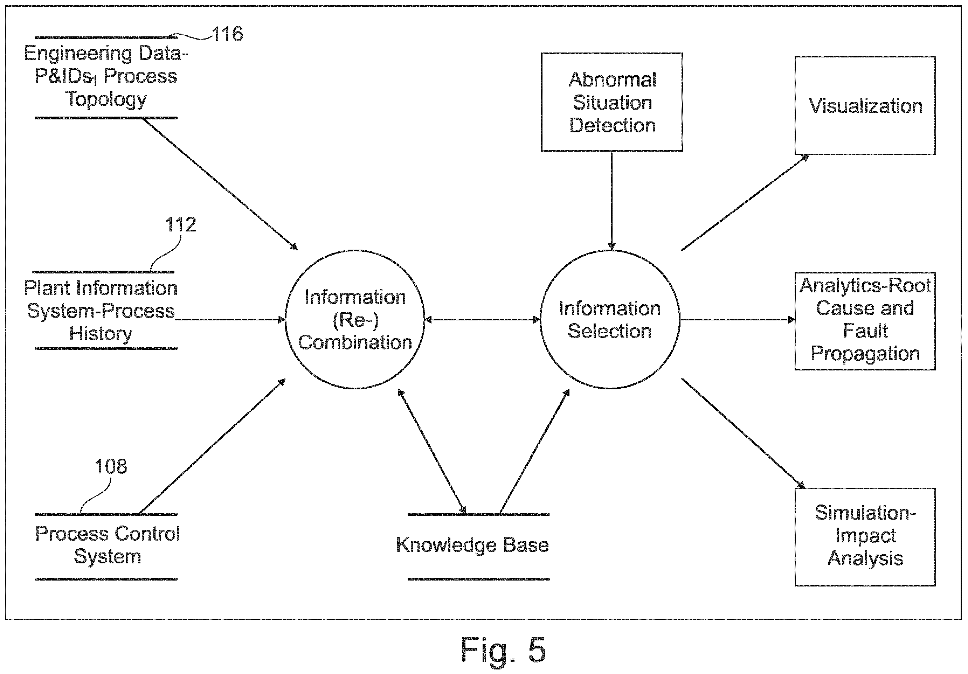

Referring now to Fig. 5, the modeling tool 114 may be configured to combine engineering data 116 e.g. plant topology and process model data with the observational data 112 from process control and monitoring. More particularly, the modeling tool 114 may combine process topology information and process control configuration with information about process state (including past and present measurements), history, and alarm and event data. In this way, dynamic information from the process control system 108 and static information about the process topology, e.g. the possible flow of information, material or energy in the process 102 may be combined. Preferably the process topology information is available in a machine-readable form that is up-to-date.

The modeling tool 114 may be configured (using e.g. programming interfaces to relevant components of the process control system 108) to:

1. find the connections between elements in the process topology. (material, energy and information flows);
2. find the connections between control system objects, e.g. control modules, I/O objects/tags, aspect objects, alarm conditions, events, historical measurements and events/timeseries and objects in the topology model using:

a) naming conventions, e.g. tag names;
b) information available in process control application configuration, e.g. connections between process variables, I/O points and properties in e.g. OPC DA;
c) information available in process historian configuration;
d) specific conventions used in control application libraries can be used (a shared knowledge base of such conventions for the control application libraries available for the plant 100 can be built up over time);

3. select relevant subsets of process variables/alarm conditions for a specific (abnormal) situation using:

a) process control system state information, e.g. a set of process variables or alarms conditions, as a starting point;
b) the process topology model, as a graph, containing topology elements (instruments, control loops, pipes, vessels etc.) and their connections (material, information, energy flow);
c) use graph analysis algorithms and heuristics that traverse the topology model based on the existence of edges being material flow or information flow among the plant elements' nodes on either a selected direction (i.e., forward or backward) or a default bi-direction. The algorithms may use a reference model that defines the types of topology nodes and edges along with the hierarchical relations of node types;

4. add historical context, e.g. event history and past process variable measurements for the selected subset of process variables/alarm conditions (this information can be ordered according to its time or frequency, e.g. the most recurring alarms of the process under investigation can be indicated using color-grade highlight or numerical weights), for example using the observational data 112;
5. use the resulting data set to create a situation specific visualization for the operator of the plant 100, in particular in the form of a causal graph with updated conditional probabilities linking the nodes in the graph that represent e.g. elements of the plant (vessels, pipes, valves, controls, instruments, etc.). Visual effects such as coloring, thickness, animation of edges and so on may be used to represent the likelihood that one variable influences another or to emphasise a link relevant with respect to a query variable (e.g. a variable that shows abnormal behavior). Example queries are described above.

The resulting causal graphs may be used as input for the above-described tool-based analysis of the plant 100, or to provide data for e.g. time-series analysis or machine learning algorithms for root cause and failure path detection. For example, causal graphs based on topology may be used to perform computational expensive analysis like transfer-entropy, or to create predictive models that determine influence in a given situation.

In this way, (qualitative) models of the process 102 may be created, without needing to rely on the expertise of an SME, that can help predict consequences of possible operator actions on relevant parts of the process 102.

The models e.g. causal graphs may be further used to parameterize and initialize (quantitative) simulation models that can offer impact calculations in the form of predictions of consequences of possible operator actions on relevant parts of the process 102. The simulation models can be used to identify possible user inputs (plant elements that have a causal influence on the abnormal situation, e.g. derived from the causal graph) that can change the current situation. The list of these input values may be used to create simulation experiments in which these values are changed in order to quantify the effect on the process state, e.g. to avoid triggering of alarm limits and system trips.

The modeling tool 114 and/or the decision support system 100 may allow user manual editing of the displayed results and offer feedback on automatic analysis of abnormal situations and their root causes. A log of the user interactions with the system can be mined for improving the performance and better meeting user expectations.

The causal graphs thus created may be used in the ways described above to identify parts parts of the process state relevant for a specific situation under investigation. This subset of the available process state information augmented with the relevant topology information may then be used to guide and focus the above-described tool-assisted analysis of the situation towards efficient and effective solution for root-cause problems. The parts of the process state may concern topology information and/or information such as system alarms or signals/measurments from control loops or instruments that are relevant for the specific situation. "Relevant" can be defined in that the part is linked to the situation (that is, abnormal signal shapes or alarms) with a probability above a corresponding threshold probability.

Although the decision support system 110 and modeling tool 114 are shown as separate, individual units, it will be appreciated that these systems may form part of the same unit, such as the process control system, and that these systems could be distributed systems.

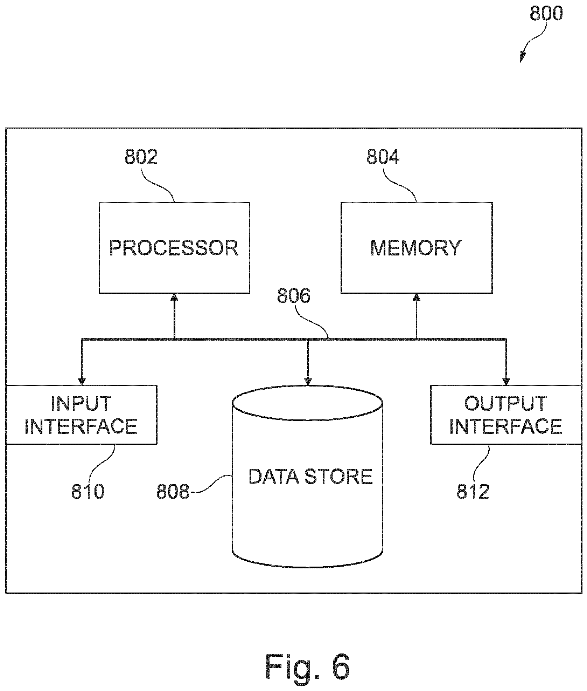

Referring now to Fig. 6, a high-level illustration of an exemplary computing device 800 that can be used in accordance with the systems and methodologies disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800 .

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

**Claims**

1. A decision support system (110) for an industrial plant (100), the decision support system (110) being configured to:

obtain a causal graph (118) modeling causal assumptions relating to conditional dependence between variables in the industrial plant (100);
obtain observational data (112) relating to operation of the industrial plant (100); and
perform causal inference using the causal graph (118) and the observational data (112) to estimate at least one causal effect (120) relevant for making decisions when operating the industrial plant (100),
**characterized in that** performing the causal inference comprises: identifying the causal effect (120) based on an input query; estimating the causal effect; validating the causal effect (120); and presenting the causal effect (120), wherein estimating the causal effect (120) comprises using conditional probabilistic formulae to estimate the strength of the causal relationship between two of the variables,
wherein validating the causal effect (120) comprises performing data subset validation by reestimating the strength of the causal relationship using only a subset of the observational data and/or performing placebo treatment by reestimating the strength of the causal relationship using observational data (112) in which data including a variable is replaced with data in which the same variable is not present.

2. The decision support system (110) of claim 1, wherein presenting the causal effect (120) comprises outputting the causal effect (120) to a human plant operator and/or outputting the causal effect (120) to an automated plant operation system.

3. The decision support system (110) of any preceding claim, further configured to perform root-cause analysis in relation to a given variable in the industrial plant (100) to identify which of the other variables in the causal graph (118) are most likely to influence the given variable,
wherein performing the root-cause analysis for the given variable comprises: performing the causal inference to estimate the strength of the causal relationship between the given variable and each of the other variables.

4. The decision support system (110) of any preceding claim, further configured to find corrective actions capable of effecting changes in a given variable,

   wherein finding the corrective actions comprises
   using the causal graph (118) and the observational data (112) to identify controlled variables in the industrial plant (100) that exhibit a causal relationship with the given variable;
   and performing the causal inference to estimate the strength of the causal relationship between the given variable and each of the other variables in the causal graph (118) that is a controlled variable.

5. The decision support system (110) of any preceding claim, further configured to perform what-if analysis to identify one or more possible side effects of changing a controlled variable in the industrial plant.

6. The decision support system (110) of claim 5, wherein performing the what-if analysis comprises: identifying first and second variables in the causal graph (118) which each exhibit a causal relationship with a third variable but not with each other, and performing the causal inference to estimate the degree to which the causal effect (120) of the first variable on the third variable is modified by the second variable.

7. A decision support method for an industrial plant, the decision support method comprising:

   obtaining a causal graph (118) modeling causal assumptions relating to conditional dependence between variables in the industrial plant;
   receiving observational data (112) relating to operation of the industrial plant; and
   performing causal inference using the causal graph (118) and the observational data (112) to estimate at least one causal effect (120) relevant for making decisions when operating the industrial plant (100),
   **characterized in that** performing the causal inference comprises: identifying the causal effect (120) based on an input query; estimating the causal effect; validating the causal effect (120); and presenting the causal effect (120),
   wherein estimating the causal effect (120) comprises using conditional probabilistic formulae to estimate the strength of the causal relationship between two of the variables,
   wherein validating the causal effect (120) comprises performing data subset validation by reestimating the strength of the causal relationship using only a subset of the observational data and/or performing placebo treatment by reestimating the strength of the causal relationship using observational data (112) in which data including a variable is replaced with data in which the same variable is not present.

8. A computer-readable medium comprising instructions which, when executed by a computing device, cause the computing device to perform the method of claim 7.

**Patentansprüche**

1. Ein Entscheidungsunterstützungssystem (110) für eine Industrieanlage (100), wobei das Entscheidungsunterstützungssystem (110) eingerichtet ist zum:

   Erfassen eines Kausalgraphen (118), der kausale Annahmen in Bezug auf bedingte Abhängigkeiten zwischen Variablen in der Industrieanlage (100) modelliert;

Erfassen von Beobachtungsdaten (112), die den Betrieb der Industrieanlage (100) betreffen; und Durchführen einer kausalen Inferenz unter Verwendung des Kausalgraphen (118) und der Beobachtungsdaten (112), um mindestens eine kausale Wirkung (120) zu schätzen, die für die Entscheidungsfindung beim Betrieb der Industrieanlage (100) relevant ist, **dadurch gekennzeichnet, dass** die Durchführung der kausalen Inferenz Folgendes umfasst:

Identifikation der kausalen Wirkung (120) basierend auf einer Eingabeanfrage;
Schätzung der kausalen Wirkung;
Validierung der kausalen Wirkung (120); und
Darstellung der kausalen Wirkung (120),
wobei die Schätzung der kausalen Wirkung (120) die Verwendung von bedingten probabilistischen Formeln umfasst, um die Stärke der kausalen Beziehung zwischen zwei der Variablen zu schätzen,
wobei die Validierung der kausalen Wirkung (120) die Durchführung einer Validierung anhand von Teilmengen der Daten umfasst, indem die Stärke der kausalen Beziehung erneut geschätzt wird, jedoch nur unter Verwendung einer Teilmenge der Beobachtungsdaten, und/oder die Durchführung eines Placebo-Tests, indem die Stärke der kausalen Beziehung erneut geschätzt wird unter Verwendung von Beobachtungsdaten (112), bei denen Daten, die eine Variable enthalten, durch Daten ersetzt werden, bei denen dieselbe Variable nicht vorhanden ist.

2. Entscheidungsunterstützungssystem (110) nach Anspruch 1, wobei die Darstellung der kausalen Wirkung (120) Folgendes umfasst:

Ausgabe der kausalen Wirkung (120) an einen menschlichen Bediener der Anlage und/oder
Ausgabe der kausalen Wirkung (120) an ein automatisiertes Anlagenbetriebssystem.

3. Entscheidungsunterstützungssystem (110) nach einem der vorhergehenden Ansprüche, das ferner eingerichtet ist, eine Ursachenanalyse in Bezug auf eine gegebene Variable in der Industrieanlage (100) durchzuführen, um zu identifizieren, welche der anderen Variablen im Kausalgraphen (118) die gegebene Variable am wahrscheinlichsten beeinflussen,
wobei die Durchführung der Ursachenanalyse für die gegebene Variable Folgendes umfasst:
Durchführung der kausalen Inferenz, um die Stärke der kausalen Beziehung zwischen der gegebenen Variable und jeder der anderen Variablen zu schätzen.

4. Entscheidungsunterstützungssystem (110) nach einem der vorhergehenden Ansprüche, das ferner eingerichtet ist, Korrekturmaßnahmen zu ermitteln, die geeignet sind, Änderungen an einer gegebenen Variablen herbeizuführen, wobei die Ermittlung der Korrekturmaßnahmen Folgendes umfasst:

Verwendung des Kausalgraphen (118) und der Beobachtungsdaten (112), um gesteuerte Variablen in der Industrieanlage (100) zu identifizieren, die eine kausale Beziehung mit der gegebenen Variablen aufweisen; und
Durchführung der kausalen Inferenz, um die Stärke der kausalen Beziehung zwischen der gegebenen Variablen und jeder gesteuerten Variablen im Kausalgraphen (118) zu schätzen.

5. Entscheidungsunterstützungssystem (110) nach einem der vorhergehenden Ansprüche, das ferner eingerichtet ist, eine "Was-wäre-wenn"-Analyse durchzuführen, um eine oder mehrere mögliche Nebenwirkungen einer Änderung einer gesteuerten Variablen in der Industrieanlage zu identifizieren.

6. Entscheidungsunterstützungssystem (110) nach Anspruch 5, wobei die Durchführung der "Was-wäre-wenn"-Analyse Folgendes umfasst:

Identifikation einer ersten und einer zweiten Variablen im Kausalgraphen (118), die jeweils eine kausale Beziehung zu einer dritten Variablen, jedoch keine kausale Beziehung zueinander aufweisen, und
Durchführung der kausalen Inferenz, um das Ausmaß zu schätzen, in dem die kausale Wirkung (120) der ersten Variablen auf die dritte Variable durch die zweite Variable modifiziert wird.

7. Entscheidungsunterstützungsverfahren für eine Industrieanlage, wobei das Verfahren Folgendes umfasst:

Erfassen eines Kausalgraphen (118), der kausale Annahmen in Bezug auf bedingte Abhängigkeiten zwischen Variablen in der Industrieanlage modelliert; Erfassen von Beobachtungsdaten (112), die den Betrieb der Industrieanlage betreffen; und

Durchführung einer kausalen Inferenz unter Verwendung des Kausalgraphen (118) und der Beobachtungsdaten (112), um mindestens eine kausale Wirkung (120) zu schätzen, die für die Entscheidungsfindung beim Betrieb der Industrieanlage (100) relevant ist,

**dadurch gekennzeichnet, dass** die Durchführung der kausalen Inferenz Folgendes umfasst:

Identifikation der kausalen Wirkung (120) basierend auf einer Eingabeanfrage;
Schätzung der kausalen Wirkung;
Validierung der kausalen Wirkung (120); und
Darstellung der kausalen Wirkung (120),
wobei die Schätzung der kausalen Wirkung (120) die Verwendung von bedingten probabilistischen Formeln umfasst, um die Stärke der kausalen Beziehung zwischen zwei Variablen zu schätzen,
wobei die Validierung der kausalen Wirkung (120) Folgendes umfasst: Durchführung einer Validierung anhand von Teilmengen der Daten durch erneute Schätzung der Stärke der kausalen Beziehung, jedoch nur unter Verwendung einer Teilmenge der Beobachtungsdaten, und/oder Durchführung eines Placebo-Tests, indem die Stärke der kausalen Beziehung erneut geschätzt wird, unter Verwendung von Beobachtungsdaten (112), bei denen Daten, die eine Variable enthalten, durch Daten ersetzt werden, bei denen dieselbe Variable nicht vorhanden ist.

8. Computerlesbares Medium, das Anweisungen umfasst, die, wenn sie von einem Rechengerät ausgeführt werden, das Rechengerät dazu veranlassen, das Verfahren nach Anspruch 7 auszuführen.

**Revendications**

1. Système d'aide à la décision (110) pour une installation industrielle (100), le système d'aide à la décision (110) étant configuré pour :

obtenir un graphique causal (118) modélisant les hypothèses causales relatives à la dépendance conditionnelle entre des variables de l'installation industrielle (100) ;
obtenir des données d'observation (112) relatives au fonctionnement de l'installation industrielle (100) ; et réaliser une inférence causale à l'aide du graphique causal (118) et des données d'observation (112) pour estimer au moins un effet causal (120) pertinent pour prendre des décisions lors du fonctionnement de l'installation industrielle (100),
**caractérisé en ce que** :
la réalisation de l'inférence causale comprend :

l'identification de l'effet causal (120) sur la base d'une requête d'entrée ; l'estimation de l'effet causal ; la validation de l'effet causal (120) ; et la présentation de l'effet causal (120),
l'estimation de l'effet causal (120) comprenant l'utilisation de formules probabilistes conditionnelles pour estimer la force de la relation causale entre deux des variables,
la validation de l'effet causal (120) comprenant la réalisation d'une validation de sous-ensemble de données en réestimant la force de la relation causale en utilisant uniquement un sous-ensemble des données d'observation et/ou en réalisant un traitement placebo en réestimant la force de la relation causale à l'aide de données d'observation (112) dans lesquelles des données comprenant une variable sont remplacées par des données dans lesquelles la même variable n'est pas présente.

2. Système d'aide à la décision (110) selon la revendication 1, la présentation de l'effet causal (120) comprenant l'émission de l'effet causal (120) à un opérateur humain de l'installation et/ou l'émission de l'effet causal (120) à un système automatisé de fonctionnement de l'installation.

3. Système d'aide à la décision (110) selon n'importe quelle revendication précédente, configuré en outre pour réaliser une analyse des causes profondes en relation avec une variable donnée dans l'installation industrielle (100) afin d'identifier lesquelles des autres variables du graphique causal (118) sont les plus susceptibles d'influencer la variable donnée,
la réalisation de l'analyse des causes profondes pour la variable donnée comprenant : la réalisation de l'inférence causale pour estimer la force de la relation causale entre la variable donnée et chacune des autres variables.

**4.** Système d'aide à la décision (110) selon n'importe quelle revendication précédente, configuré en outre pour trouver des actions correctives capables de réaliser des changements dans une variable donnée,

la recherche des actions correctives comprenant l'utilisation du graphique causal (118) et des données d'observation (112) pour identifier des variables commandées dans l'installation industrielle (100) qui présentent une relation causale avec la variable donnée ;
et la réalisation de l'inférence causale pour estimer la force de la relation causale entre la variable donnée et chacune des autres variables du graphique causal (118) qui est une variable commandée.

**5.** Système d'aide à la décision (110) selon n'importe quelle revendication précédente, configuré en outre pour réaliser une analyse par simulation afin d'identifier un ou plusieurs effets secondaires possibles de la modification d'une variable commandée dans l'installation industrielle.

**6.** Système d'aide à la décision (110) selon la revendication 5, la réalisation de l'analyse par simulation comprenant : l'identification des première et deuxième variables dans le graphique causal (118) qui présentent chacune une relation causale avec une troisième variable mais pas l'une avec l'autre, et la réalisation de l'inférence causale pour estimer le degré auquel l'effet causal (120) de la première variable sur la troisième variable est modifié par la deuxième variable.

**7.** Procédé d'aide à la décision pour une installation industrielle, le procédé d'aide à la décision comprenant :

l'obtention d'un graphique causal (118) modélisant les hypothèses causales relatives à la dépendance conditionnelle entre les variables de l'installation industrielle ;
la réception de données d'observation (112) relatives au fonctionnement de l'installation industrielle ; et
la réalisation d'une inférence causale à l'aide du graphique causal (118) et des données d'observation (112) pour estimer au moins un effet causal (120) pertinent pour prendre des décisions lors du fonctionnement de l'installation industrielle (100), **caractérisé en ce que** :
la réalisation de l'inférence causale comprend :

l'identification de l'effet causal (120) sur la base d'une requête d'entrée ; l'estimation de l'effet causal ; la validation de l'effet causal (120) ; et la présentation de l'effet causal (120),
l'estimation de l'effet causal (120) comprenant l'utilisation de formules probabilistes conditionnelles pour estimer la force de la relation causale entre deux des variables,
la validation de l'effet causal (120) comprenant la réalisation d'une validation de sous-ensemble de données en réestimant la force de la relation causale en utilisant uniquement un sous-ensemble des données d'observation et/ou en réalisant un traitement placebo en réestimant la force de la relation causale à l'aide de données d'observation (112) dans lesquelles des données comprenant une variable sont remplacées par des données dans lesquelles la même variable n'est pas présente.

**8.** Support lisible par ordinateur comprenant des instructions qui, lorsqu'elles sont exécutées par un dispositif informatique, amènent le dispositif informatique à réaliser le procédé selon la revendication 7.

100

Process Equipment 104
- CPV$_1$
- CPV$_2$
- ...
- CPV$_i$

Process 102

Sensors 106
- MPV$_1$
- MPV$_2$
- ...
- MPV$_i$

Process Control System 108

Observational Data 112

Modeling Tool 114

Causal Graph 118

Decision Support System 110

Causal Effect 120

Engineering Data 116

Fig. 1

Queried relationship

Causal Graph 118

201

Identify relevant causal
relationship from causal graph
202

200

Estimate casual effect
204

Validate causal effect
206

Present causal effects
208

Fig. 2

Fig. 3

Fig. 4

Fig. 5

800

802                           804

PROCESSOR              MEMORY

                    806

INPUT                              OUTPUT
INTERFACE         DATA STORE       INTERFACE

810          808                   812

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005015217 A
- US 2005049988 A
- US 2013159240 A